(19) Europäisches Patentamt

European Patent Office

Office européen des brevets

(11) **EP 3 102 627 B1**

(12) # EUROPEAN PATENT SPECIFICATION

(45) Date of publication and mention
of the grant of the patent:
**25.03.2020   Bulletin 2020/13**

(51) Int Cl.:
*C08J 5/18* (2006.01)          *C08F 210/02* (2006.01)
*C08F 210/16* (2006.01)       *C08F 4/634* (2006.01)
*C08F 4/638* (2006.01)         *C08F 4/637* (2006.01)
*B32B 27/32* (2006.01)

(21) Application number: **15706603.6**

(22) Date of filing: **09.02.2015**

(86) International application number:
**PCT/US2015/015053**

(87) International publication number:
**WO 2015/120401 (13.08.2015 Gazette 2015/32)**

(54) **POLYETHYLENE COMPOSITION AND FILMS MADE THEREFROM**

POLYETHYLENZUSAMMENSETZUNG UND DARAUS HERGESTELLTE FILME

COMPOSITION DE POLYÉTHYLÈNE ET FILMS FABRIQUÉS À PARTIR DE CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **07.02.2014   US 201461937057 P**

(43) Date of publication of application:
**14.12.2016   Bulletin 2016/50**

(73) Proprietor: **Dow Global Technologies LLC
Midland, MI 48674 (US)**

(72) Inventors:
• **DEMIRORS, Mehmet
Pearland, TX 77584 (US)**
• **KARJALA, Teresa P.
Lake Jackson, TX 77566 (US)**
• **ALFONZO, Carlos G.
Houston, TX 77021 (US)**

• **SAVARGAONKAR, Nilesh R.
Pearland, TX 77584 (US)**
• **PATEL, Rajen M.
Lake Jackson, Texas 77566 (US)**
• **DESJARDINS, Sylvie
Lake Jackson, TX 77566 (US)**

(74) Representative: **Boult Wade Tennant LLP
Salisbury Square House
8 Salisbury Square
London EC4Y 8AP (GB)**

(56) References cited:
**EP-A1- 2 228 395     WO-A1-2012/166469**

Remarks:
The file contains technical information submitted after
the application was filed and not included in this
specification

**EP 3 102 627 B1**

**Description**

**FIELD OF THE INVENTION**

The invention relates to a polyethylene composition and films made therefrom.

**BACKGROUND**

Currently the demand for polyethylene worldwide is in excess of 80 million metric tons per year. Because there is a need for significant and continued differentiation of polymer products in the polyethylene business, researchers have devoted a great deal of effort to searching for process alterations that will yield such new products. One focus involves exploring new catalysts.

Conventional solution polyethylene Ziegler Natta catalysts based on a Ti precursor supported on precipitated $MgCl_2$ yield linear low density polyethylene (LLDPE) resins with broad molecular weight distributions and composition distributions.

In LLDPE production, ethylene is generally copolymerized with a short-chain olefin comonomer (for example, 1-butene, 1-hexene and/or 1-octene). The resulting polymer is substantially linear but includes significant numbers of short chain branches, and these characteristics give it a higher tensile strength, higher impact strength and higher puncture resistance than those of low density polyethylene (LDPE). These improved properties, in turn, mean that lower thickness (gauge) films can be blown and the product exhibits improved environmental stress cracking resistance. LLDPE is used predominantly in film applications due to its toughness, flexibility and relative transparency. Product examples range from agricultural films, food protection wrap, and bubble wrap, to multilayer and composite films.

**SUMMARY OF THE INVENTION**

In a first embodiment, the present disclosure provides a polyethylene composition comprising the reaction product of ethylene and optionally one or more alpha-olefin comonomers in the presence of a catalyst composition comprising a multi-metallic procatalyst via solution polymerization; wherein said polyethylene composition is characterized by one or more of the following properties: a melt index, $I_2$, measured according to ASTM D 1238 (2.16 kg @190°C), of from 0.9 to 5 g/10 min; density, measured according to ASTM D-792, from 0.910 to 0.935 $g/cm^3$ (g/cc); a melt flow ratio, $I_{10}/I_2$, wherein $I_{10}$ is measured according to ASTM D1238 (10 kg @ 190°C) of from 6 to 7.4; molecular weight distribution, and MWD, ($M_w/M_n$) of from 2.5 to 3.5.

**DETAILED DESCRIPTION OF THE EMBODIMENTS**

In a first embodiment, the instant disclosure provides a polyethylene composition comprising the reaction product of ethylene and optionally one or more alpha-olefin comonomers in the presence of a catalyst composition comprising a multi-metallic procatalyst via solution polymerization; wherein said polyethylene composition is characterized by one or more of the following properties: a melt index, $I_2$, measured according to ASTM D 1238 (2.16 kg @190°C), of from 0.9 to 5 g/10 min; density, measured according to ASTM D-792, of from 0.910 to 0.935 $g/cm^3$; a melt flow ratio, $I_{10}/I_2$, wherein $I_{10}$ is measured according to ASTM D1238 (10 kg @ 190°C) of from 6 to 7.4; and molecular weight distribution, MWD, ($M_w/M_n$) of from 2.5 to 3.5.

The polyethylene composition, exhibits a melt index, $I_2$, from 2.5 to 5 g/10 min.

In particular embodiments, the polyethylene composition has a density (measured according to ASTM D-792) of from 0.910 to 0.935 $g/cm^3$ (g/cc). All individual values and subranges from 0.910 to 0.935 g/cc are included herein and disclosed herein; for example, the density of the polyethylene composition may be from a lower limit of 0.910, 0.915, 0.92, 0.925, or 0.930 g/cc to an upper limit of 0.915, 0.92, 0.925, 0.930, or 0.935 g/cc. For example, the density of the polyethylene composition can be from 0.910 to 0.935 g/cc, or in the alternative, the density of the polyethylene composition can be from 0.910 to 0.920 g/cc, or in the alternative, the density of the polyethylene composition can be from 0.920 to 0.935 g/cc, or in the alternative, the density of the polyethylene composition can be from 0.915 to 0.925 g/cc, or in the alternative, the density of the polyethylene composition can be from 0.912 to 0.920 g/cc.

In certain embodiments, the polyethylene composition has a melt flow ratio, $I_{10}/I_2$, wherein $I_{10}$ is measured according to ASTM D1238 (10 kg @ 190°C) of from 6 to 7.4. All individual values and subranges from 6 to 7.4 are included herein and disclosed herein; for example, the polyethylene composition melt flow ratio can be from a lower limit of 6, 6.1, 6.2, 6.3, 6.4, 6.5, 6.6, 6.7, 6.8, 6.9, 7, 7.1, or 7.3 to an upper limit of 6.1, 6.2, 6.3, 6.4, 6.5, 6.6, 6.7, 6.8, 6.9, 7, 7.1, 7.2, or 7.4. For example, the polyethylene composition melt flow ratio can be from 6 to 7.4, or in the alternative, the polyethylene composition melt flow ratio can be from 6 to 6.7, or in the alternative, the polyethylene composition melt flow ratio can be from 6 to 7.2, or in the alternative, the polyethylene composition melt flow ratio can be from 6.2 to 7, or in the alternative, the polyethylene composition melt flow ratio can be from 6.3 to 6.9.

In particular embodiments, the polyethylene composition may have a molecular weight distribution, MWD, $(M_w/M_n)$ of from 2.5 to 3.5. All individual values and subranges from 2.5 to 3.5 are included herein and disclosed herein; for example the MWD can be from a lower limit of 2.5, 2.7., 2.9, 3.1, 3.3 or 3.4 to an upper limit of 2.6, 2.8, 3, 3.2, 3.4, or 3.5. For example, the polyethylene composition may have an MWD of from 2.5 to 3.5, or in the alternative, the polyethylene composition may have an MWD of from 2.5 to 3.5, or in the alternative, the polyethylene composition may have an MWD of from 2.7 to 3.5, or in the alternative, the polyethylene composition may have an MWD of from 3 to 3.5, or in the alternative, the polyethylene composition may have an MWD of from 2.8 to 3.1, or in the alternative, the polyethylene composition may have an MWD of from 2.5 to 3.4.

In an alternative embodiment, the instant invention provides a cast film comprising one or more polyethylene compositions in accordance with any embodiment disclosed herein.

The polyethylene composition comprises the reaction product of ethylene and optionally one or more alpha-olefin comonomers in the presence of a catalyst composition comprising a multi-metallic procatalyst via solution polymerization.

In a particular embodiment, the instant disclosure provides a polyethylene composition in accordance with any embodiment described herein except that the solution polymerization occurs in a single reactor. In another embodiment, the instant invention provides a polyethylene composition in accordance with any embodiment described herein except that the solution polymerization occurs in a dual reactor system wherein the same product is produced in each of the dual reactors.

The reaction product is produced by reacting ethylene and optionally one or more alpha-olefin comonomers in the presence of a catalyst composition comprising a multi-metallic procatalyst. The multi-metallic procatalyst used in producing the reaction product is at least trimetallic, but may also include more than three transition metals, and thus may in one embodiment be defined more comprehensively as multi-metallic. These three, or more, transition metals are selected prior to production of the catalyst. In a particular embodiment, the multi-metal catalyst comprises titanium as one element.

The catalyst compositions may be prepared beginning first with preparation of a conditioned magnesium halide based support. Preparation of a conditioned magnesium halide based support begins with selecting an organomagnesium compound or a complex including an organomagnesium compound. Such compound or complex is desirably soluble in an inert hydrocarbon diluent. The concentrations of components are preferably such that when the active halide, such as a metallic or non-metallic halide, and the magnesium complex are combined, the resultant slurry is from about 0.005 to about 0.2 molar (moles/liter) with respect to magnesium. Examples of suitable inert organic diluents include liquefied ethane, propane, isobutane, n-butane, n-hexane, the various isomeric hexanes, isooctane, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and especially those having boiling points in the range from about -50 °C to about 200 °C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. Preferred sources of magnesium moieties may include the magnesium C2-C8 alkyls and C1-C4 alkoxides. Such organomagnesium compound or complex may be reacted with a metallic or non-metallic halide source, such as a chloride, bromide, iodide, or fluoride, in order to make a magnesium halide compound under suitable conditions. Such conditions may include a temperature ranging from -25 °C to 100 °C, preferably 0 °C to 50 °C; a time ranging from 1 to 12 hours, preferably from 4 to 6 hours; or both. The result is a magnesium halide based support.

The magnesium halide support is then reacted with a selected conditioning compound containing an element selected from the group consisting of boron, aluminum, gallium, indium and tellurium, under conditions suitable to form a conditioned magnesium halide support. This compound and the magnesium halide support are then brought into contact under conditions sufficient to result in a conditioned magnesium halide support. Such conditions may include a temperature ranging from 0 °C to 50 °C, preferably from 25 °C to 35 °C; a time ranging from 4 to 24 hours, preferably from 6 to 12 hours; or both. Without wishing to be bound by any theory of mechanism, it is suggested that this aging serves to facilitate or enhance adsorption of additional metals onto the support.

Once the conditioned support is prepared and suitably aged, it is brought into contact with a titanium compound. In certain preferred embodiments titanium halides or alkoxides, or combinations thereof, may be selected. Conditions may include a temperature within the range from 0 °C to 50 °C, preferably from 25 °C to 35 °C; a time from 3 hours to 24 hours, preferably from 6 hours to 12 hours; or both. The result of this step is adsorption of at least a portion of the titanium compound onto the conditioned magnesium halide support.

Finally, two additional metals, referred to herein as "the second metal" and "the third metal" for convenience, will also be adsorbed onto the magnesium based support, The "second metal" and the "third metal" are independently selected from zirconium (Zr), hafnium (Hf), vanadium (V), niobium (Nb), tantalum (Ta), chromium (Cr), molybdenum (Mo), and tungsten (W). These metals may be incorporated in any of a variety of ways known to those skilled in the art, but generally contact between the conditioned magnesium based halide support including titanium and the selected second and third metals, in, e.g., liquid phase such as an appropriate hydrocarbon solvent, will be suitable to ensure deposition of the additional metals to form what may now be referred to as the "procatalyst," which is a multi-metallic procatalyst.

The multi-metallic procatalyst has a molar ratio constitution that is specific and which is believed to be an important feature in ensuring the desirable polymer properties that may be attributed to the catalyst made from the procatalyst. Specifically, the procatalyst desirably exhibits a molar ratio of the magnesium to a combination of the titanium and the second and third metals that ranges from 30:1 to 5:1; under conditions sufficient to form a multi-metallic procatalyst. Thus, the overall molar ratio of magnesium to titanium ranges from 8:1 to 80:1.

Once the procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the procatalyst and the organometallic cocatalyst may be carried out *in situ,* or just prior to entering the polymerization reactor. Thus, the combination of the cocatalyst and the procatalyst may occur under a wide variety of conditions. Such conditions may include, for example, contacting them under an inert atmosphere such as nitrogen, argon or other inert gas at temperatures in the range from 0 °C to 250 °C, preferably from 15 °C to 200 °C. In the preparation of the catalytic reaction product, it is not necessary to separate hydrocarbon soluble components from hydrocarbon insoluble components. Time for contact between the procatalyst and cocatalyst may desirably range, for example, from 0 to 240 seconds, preferably from 5 to 120 seconds. Various combinations of these conditions may be employed.

Once the catalyst compositions of the invention have been prepared, they are suitable to use for olefin polymerizations. In particular embodiments these are slurry (wherein the polymer is not dissolved in the carrier) or solution (wherein the temperature is high enough to solubilize the polymer in the carrier) polymerizations, or the like, to prepare LLDPE. In general this may be carried out generally in a reaction medium, such as an isoparaffin or other aliphatic hydrocarbon diluents, with the olefin, or a combination of olefins, being brought into contact with the reaction medium in the presence of the selected catalyst, preferably as the sole catalyst. Conditions may be any that are suitable, and a molecular weight regulator, frequently hydrogen, is often present in the reaction vessel in order to suppress formation of undesirably high molecular weight polymers. Additional information on preparation and use of the multi-metal catalysts are found in commonly owned, copending U.S. Application No. 14/116070, the disclosure of which is incorporated herein by reference.

The polyethylene composition comprises the reaction product of ethylene and optionally one or more alpha-olefin comonomers in the presence of a catalyst composition comprising a multi-metallic procatalyst via solution polymerization. In one embodiment, the reaction product is a polyethylene homopolymer. In an alternative embodiment, the reaction product is an interpolymer of ethylene and one or more alpha-olefins. In one embodiment, the one or more alpha-olefins are selected from the group consisting of C3-C20 acetylenically unsaturated monomers and C4-C18 diolefins. Those skilled in the art will understand that selected monomers are desirably those that do not destroy conventional Ziegler-Natta catalysts. For example, in one embodiment ethylene or a mixture of ethylene and from about 0.1 to about 20 weight percent (wt%), for example, from about 0.1 to about 15 wt%, or in the alternative, from about 0.1 to about 10 wt%; or in the alternative, from 0.1 to about 5 weight percent of 1-hexene, 1-octene, or a similar higher $\alpha$-olefin, based on total monomer in the final copolymer, may be used.

In the polymerization process employing the aforementioned catalytic reaction product, polymerization is effected by adding a catalytic amount of the multi-metal catalyst composition to a polymerization reactor containing the selected $\alpha$-olefin monomer, or vice versa. The polymerization reactor is maintained at temperatures in the range from 150 °C to 300 °C, preferably at solution polymerization temperatures, e.g., from 150 °C to 250 °C, for a residence time, in certain non-limiting embodiments, ranging from 5 minutes to 20 minutes. Longer or shorter residence times may alternatively be employed. It is generally desirable to carry out the polymerization in the absence of moisture and oxygen and in the presence of a catalytic amount of the catalytic reaction product that is typically within the range from 0.0001 to about 0.01 milligram-atoms transition metal per liter of diluent. It is understood, however, that the most advantageous catalyst concentration will depend upon polymerization conditions such as temperature, pressure, solvent and the presence of catalyst poisons and that the foregoing range is given for illustrative purposes of one particular but non-limiting embodiment only.

For example, pressures may be relatively low, e.g., from 150 to 3,000 psig (1.0 to 20.7 MPa), preferably from 250 to 1,000 psig (1.7 to 6.9 MPa), most preferably from 450 to 800 psig (3.1 to 5.5 MPa). However, polymerization within the scope of the invention can occur at pressures from atmospheric up to pressures determined by the capabilities of the polymerization equipment.

Generally in the polymerization process, a carrier which may be an inert organic diluent or solvent or excess monomer is generally employed. Generally care is desirably taken to avoid oversaturation of the solvent with polymer. If such saturation occurs before the catalyst becomes depleted, the full efficiency of the catalyst may not be realized. In particular embodiments, it may be preferable that the amount of polymer in the carrier not exceed 30 percent, based on the total weight of the reaction mixture. It may also be very desirable to stir the polymerization components in order to attain desirable levels of temperature control and to enhance the uniformity of the polymerization throughout the polymerization zone. For example, in the case of relatively more rapid reactions with relatively active catalysts, means may be provided for refluxing monomer and diluent, if diluent is included, thereby removing some of the heat of reaction. In any event, adequate means should be provided for dissipating the exothermic heat of polymerization. Thus, polymerization may be effected in a batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

In order to enhance catalyst efficiency in the polymerization of ethylene, it may also be desirable to maintain a certain ethylene concentration in the diluents in order to ensure reactor stability and, preferably, optimize catalyst efficiency. In some embodiments this may include a ratio of solvent to ethylene ranging from 1:2 to 1:8, preferably 1:3 to 1:5. To achieve this when an excess of ethylene is fed into the system, a portion of the ethylene can be vented.

Hydrogen is often employed in the practice of this invention, for the purpose of lowering the molecular weight of the resultant polymer. For the purpose of the invention, it is beneficial to employ hydrogen in the polymerization mixture in concentrations ranging preferably from 0.001 to 1 mole per mole of monomer. The larger amounts of hydrogen within this range may be useful to produce generally lower molecular weight polymer. It is generally known to those skilled in the art that hydrogen may be added to the polymerization vessel either with a monomer stream, or separately therefrom, before, during or after addition of the monomer to the polymerization vessel. However, in preferred embodiments it is highly desirable to ensure that the hydrogen is added either before or during addition of the catalyst, in the range of from 200,000 to 3 million grams of polymer per gram of Ti, such as, for example, from 600,000 to 2 million grams of polymer per gram of Ti.

The resulting polymer may be effectively recovered from the polymerization mixture by driving off unreacted monomer and diluent, where such is employed. No further removal of impurities is required. The resultant polymer may contain small amounts of catalyst residue as shown in the succeeding examples and also possess a relatively narrow molecular weight distribution. The resulting polymer may further be melt screened. Subsequent to the melting process in the extruder, the molten composition is passed through one or more active screens, positioned in series of more than one, with each active screen having a micron retention size of from about 2 $\mu$m to about 400 $\mu$m (2 to 4 X $10^{-5}$ m), and preferably about 2 $\mu$m to about 300 $\mu$m (2 to 3 X $10^{-5}$ m), and most preferably about 2 $\mu$m to about 70 $\mu$m (2 to 7 X $10^{-6}$ m), at a mass flux of about 5 to about 100 lb/hr/in$^2$ (1.0 to about 20 kg/s/m$^2$). Such further melt screening is disclosed in U.S. Patent No. 6,485,662, which is incorporated herein by reference to the extent that it discloses melt screening.

In an alternative embodiment, the instant invention provides a polyethylene composition in accordance with any embodiment disclosed herein except that the polyethylene composition comprises less than 20 percent by weight of units derived from one or more alpha-olefin comonomers. All individual values and subranges from less than 20 weight percent are included herein and disclosed herein; for example, the polyethylene composition may comprise less than 15 percent by weight of units derived from one or more alpha-olefin comonomers; or in the alternative, the polyethylene composition may comprise less than 12 percent by weight of units derived from one or more alpha-olefin comonomers; or in the alternative, the polyethylene composition may comprise less than 9 percent by weight of units derived from one or more alpha-olefin comonomers; or in the alternative, the polyethylene composition may comprise less than 7 percent by weight of units derived from one or more alpha-olefin comonomers; or in the alternative, the polyethylene composition may comprise less than 5 percent by weight of units derived from one or more alpha-olefin comonomers; or in the alternative, the polyethylene composition may comprise less than 3 percent by weight of units derived from one or more alpha-olefin comonomers; or in the alternative, the polyethylene composition may comprise less than 1 percent by weight of units derived from one or more alpha-olefin comonomers; or in the alternative, the polyethylene composition may comprise less than 0.5 percent by weight of units derived from one or more alpha-olefin comonomers.

The polyethylene composition may comprise at least 80 percent by weight of units derived from ethylene. All individual values and subranges from at least 80 weight percent are included herein and disclosed herein; for example, the polyethylene composition may comprise at least 85 percent by weight of units derived from ethylene; or in the alternative, the polyethylene composition may comprise at least 89 percent by weight of units derived from ethylene; or in the alternative, the polyethylene composition may comprise at least 91 percent by weight of units derived from ethylene; or in the alternative, the polyethylene composition may comprise at least 93 percent by weight of units derived from ethylene; or in the alternative, the polyethylene composition may comprise at least 95 percent by weight of units derived from ethylene; or in the alternative, the polyethylene composition may comprise at least 97 percent by weight of units derived from ethylene; or in the alternative, the polyethylene composition may comprise at least 99 percent by weight of units derived from ethylene; or in the alternative, the polyethylene composition may comprise at least 99.5 percent by weight of units derived from ethylene.

The polyethylene composition may further comprise greater than or equal to 1 parts by combined weight of at least three different metal residues remaining from the multi-metallic polymerization catalyst, metal catalyst residual, (i.e., one catalyst giving rise to the three different residual metals in the polyethylene composition) per one million parts of polyethylene composition, where such metals are selected from the group consisting of titanium, zirconium, hafnium, vanadium, niobium, tantalum, chromium, molybdenum, tungsten, and combinations thereof, wherein each metal residual is present at least 0.2 ppm, for example, in the range of from 0.2 to 5 ppm. All individual values and subranges from greater than or equal to 1 ppm are included herein and disclosed herein; for example, the polyethylene composition may further comprise greater than or equal to 2 parts by combined weight of at least three metal residues remaining from the multi-metallic polymerization catalyst per one million parts of polyethylene composition.

In one embodiment, the polyethylene composition comprises at least 0.75 ppm V (Vanadium). All individual values and subranges from at least 0.75 ppm V are included herein and disclosed herein; for example the lower limit of the V in the polyethylene composition may be 0.75, 1, 1.1, 1.2, 1.3 or 1.4 ppm. In yet another embodiment, the upper limit of the V in the polyethylene composition is 5, 4, 3, 2, 1.9, 1.8, 1.7, 1.6, 1.5, or 1 ppm.

In yet another embodiment, the polyethylene composition comprises at least 0.3 ppm Zr (Zirconium). All individual values and subranges from at least 0.3 ppm Zr are included herein and disclosed herein; for example the lower limit of the Zr in the polyethylene composition may be 0.3, 0.4, 0.5, 0.6 or 0.7 ppm. In yet another embodiment, the upper limit of the Zr in the polyethylene composition is 5, 4, 3, 2, 1, 0.9, 0.8 or 0.7 ppm.

In another embodiment, the instant invention provides a polyethylene composition according to any of the embodiments disclosed herein except that when the polyethylene composition is formed into a single layer film having a 0.8 mil thickness measured according to the method described herein, the film is characterized with one or more of the following properties: ultimate stretch greater than 290 % measured as described herein; and on-pallet puncture of greater than 8.5 lb measured as described herein. All individual values of greater than 290% are included herein and disclosed herein; for example the lower limit of the ultimate stretch may be 290, 295, 300, 305, 310 or 315%. In a particular embodiment, the ultimate stretch may have an upper limit of 500%, or in the alternative, 450%, or in the alternative, 400%, or in the alternative, 350%. All individual values and subranges from 8.5 lb are included herein and disclosed herein; for example, the on-pallet puncture can be from a lower limit of 8.5, 8.7, 8.9 or 9.1 lb. In a particular embodiment, the on-pallet puncture may have an upper limit of 15 lb, or in the alternative, 14.5 lb, or in the alternative, 14 lb, or in the alternative, 13.5 lb.

In another embodiment, the instant disclosure provides a polyethylene composition according to any of the embodiments disclosed herein except that when the polyethylene composition is formed into a single layer film having a 0.5 mil thickness measured according to the method described herein the film is characterized with one or more of the following properties: ultimate stretch greater than 220% measured as described herein; and on-pallet puncture of greater than 8 lb measured as described herein. All individual values of greater than 220% are included herein and disclosed herein; for example the lower limit of the ultimate stretch may be 220, 225, 250, 275, 300 or 310%. In a particular embodiment, the ultimate stretch may have an upper limit of 500%, or in the alternative, 450%, or in the alternative, 400%, or in the alternative 350%. All individual values and subranges from 8 lb are included herein and disclosed herein; for example, the on-pallet puncture can be from a lower limit of 8, 8.25, 8.5, 8.8 or 9.1 lb. In a particular embodiment, the on-pallet puncture may have an upper limit of 15 lb, or in the alternative, 14.5 lb, or in the alternative, 14 lb, or in the alternative, 13.5 lb.

In another embodiment, the instant invention provides a polyethylene composition according to any of the embodiments disclosed herein except that when the polyethylene composition is formed into a multilayer film having a 0.8 mil thickness measured according to the method described herein the film is characterized with one or more of the following: ultimate stretch greater than 320% measured as described herein; and on-pallet puncture of greater than 9 lb measured as described herein. All individual values of greater than 305% are included herein and disclosed herein; for example the lower limit of the ultimate stretch may be 320, 330, 340, 350 or 355%. In a particular embodiment, the ultimate stretch may have an upper limit of 500%, or in the alternative, 450%, or in the alternative, 400%, or in the alternative, 350%. All individual values and subranges from 9 lb are included herein and disclosed herein; for example, the on-pallet puncture can be from a lower limit of 9, 9.4, 9.8 or 10.1 lb. In a particular embodiment, the on-pallet puncture may have an upper limit of 15 lb, or in the alternative, 14.5 lb, or in the alternative, 14 lb, or in the alternative, 13.5 lb.

The inventive polyethylene composition may further comprise additional components such as other polymers and/or additives. Such additives include, but are not limited to, antistatic agents, color enhancers, dyes, lubricants, fillers, pigments, primary antioxidants, secondary antioxidants, processing aids, UV stabilizers, and combinations thereof. The inventive polyethylene composition may contain any amounts of additives. The inventive polyethylene composition may comprise from about 0 to about 10 percent by the combined weight of such additives, based on the weight of the inventive polyethylene composition including such additives. All individual values and subranges from about 0 to about 10 weight percent are included herein and disclosed herein; for example, the inventive polyethylene composition may comprise from 0 to 7 percent by the combined weight of additives, based on the weight of the inventive polyethylene composition including such additives; in the alternative, the inventive polyethylene composition may comprise from 0 to 5 percent by the combined weight of additives, based on the weight of the inventive polyethylene composition including such additives; or in the alternative, the inventive polyethylene composition may comprise from 0 to 3 percent by the combined weight of additives, based on the weight of the inventive polyethylene composition including such additives; or in the alternative, the inventive polyethylene composition may comprise from 0 to 2 percent by the combined weight of additives, based on the weight of the inventive polyethylene composition including such additives; or in the alternative, the inventive polyethylene composition may comprise from 0 to 1 percent by the combined weight of additives, based on the weight of the inventive polyethylene composition including such additives; or in the alternative, the inventive polyethylene composition may comprise from 0 to 0.5 percent by the combined weight of additives, based on the weight of the inventive polyethylene composition including such additives. Antioxidants, such as IRGAFOS 168 and IRGANOX 1010, may be used to protect the inventive polyethylene composition from thermal and/or oxidative degradation. IRGANOX 1010 is tetrakis (methylene (3,5-di-tert-butyl-4hydroxyhydrocinnamate) available from Ciba Geigy Inc. (now a part of BASF). IRGAFOS 168 is tris (2,4 di-tert-butylphenyl) phosphite available from Ciba Geigy Inc.(now a part of BASF).

Any conventional ethylene (co)polymerization reaction may be employed to produce the inventive polyethylene composition. Such conventional ethylene (co)polymerization reactions include, but are not limited to, slurry phase polymerization process, solution phase polymerization process, and combinations thereof using one or more conventional reactors, e.g., loop reactors, stirred tank reactors, batch reactors in parallel, series, and/or any combinations thereof. In one embodiment, the polymerization reactor may comprise two or more reactors in series, parallel, or combinations thereof. In one embodiment, the polymerization reactor is one reactor.

The polymers produced hereby may include a wide variety of products including, in particular embodiments, LLDPE, but also high density polyethylenes (HDPE), plastomers, medium density polyethylenes, propypropylene and polypropylene copolymers. For these and other applications articles may be prepared showing enhanced overall quality due to the narrower molecular weight distribution of the polymer. Useful forming operations for the polymers may include, but are not limited to, film, sheet, pipe and fiber extrusion and co-extrusion as well as blow molding, injection molding and rotary molding may be pursued. Films include blown or cast films formed by co-extrusion or by lamination useful as shrink film, cling film, stretch film, sealing film, oriented film, snack packaging, heavy duty bags, grocery sacks, baked and frozen food packaging, medical packaging, industrial liners, agricultural film applications, and membranes, for example, in food-contact and non-food-contact applications. Fibers include melt spinning, solution spinning and melt blown fiber operations for use in woven and non-woven form to make filters, diaper fabrics, medical garments and geotextiles. Extruded articles include medical tubing, wire and cable coatings, geomembranes and pond liners. Molded articles include single and multi-layered constructions in the form of bottles, tanks, large hollow articles, rigid food containers and toys.

In another embodiment, the instant disclosure provides a cast film according to any embodiment disclosed herein except that the film is a monolayer film.

In yet another embodiment, the instant disclosure provides a cast film according to any embodiment disclosed herein except that the film is a monolayer film having a thickness from 0.25 to 10 mils. All individual values and subranges from 0.25 to 10 mils are included herein and disclosed herein; for example, the thickness of the monolayer film can be from a lower limit of 0.25, 0.5, 1, 2, 5, 7.5 or 8 mils to an upper limit of 0.5, 1.5, 2.5, 6, 8 or 10 mils.

The instant invention provides a multi-layer film wherein at least one layer comprises the cast film according to any embodiment disclosed herein.

In another embodiment, the instant invention provides a multi-layer film wherein at least one layer comprises the cast film according to any embodiment disclosed herein having a thickness from 0.1 to 8 mils. All individual values and subranges from 0.1 to 8 mils are included herein and disclosed herein; for example, the thickness of the monolayer film can be from a lower limit of 0.1, 0.4, 3, 6, or 7 mils to an upper limit of 0.2, 0.5, 1, 4, 7 or 8 mils.

In yet another embodiment, the instant invention provides a polyethylene composition comprising the reaction product of ethylene and optionally one or more alpha-olefin comonomers in the presence of a catalyst composition comprising a multi-metallic procatalyst via solution polymerization; wherein said polyethylene composition is characterized by at least two of the following properties: a melt index, $I_2$, measured according to ASTM D 1238 (2.16 kg @190°C), of from 0.9 to 5 g/10 min; density, measured according to ASTM D-792, of from 0.910 to 0.935 g/cm$^3$; a melt flow ratio, $I_{10}/I_2$, wherein $I_{10}$ is measured according to ASTM D1238 (10 kg @ 190°C) of from 6 to 7.4; and molecular weight distribution, MWD, $(M_w/M_n)$ of from 2.5 to 3.5.

In yet another embodiment, the instant invention provides a polyethylene composition comprising the reaction product of ethylene and optionally one or more alpha-olefin comonomers in the presence of a catalyst composition comprising a multi-metallic procatalyst via solution polymerization; wherein said polyethylene composition is characterized by at least three of the following properties: a melt index, $I_2$, measured according to ASTM D 1238 (2.16 kg @190°C), of from 0.9 to 5 g/10 min; density, measured according to ASTM D-792, of from 0.910 to 0.935 g/cm$^3$; a melt flow ratio, $I_{10}/I_2$, wherein $I_{10}$ is measured according to ASTM D1238 (10 kg @ 190°C), of from 6 to 7.4; and molecular weight distribution, MWD, $(M_w/M_n)$ of from 2.5 to 3.5.

In yet another embodiment, the instant invention provides a polyethylene composition comprising the reaction product of ethylene and optionally one or more alpha-olefin comonomers in the presence of a catalyst composition comprising a multi-metallic procatalyst via solution polymerization; wherein said polyethylene composition is characterized by all of the following properties: a melt index, $I_2$, measured according to ASTM D 1238 (2.16 kg @190°C), of from 0.9 to 5 g/10 min; density, measured according to ASTM D-792, of from 0.910 to 0.935 g/cm$^3$; a melt flow ratio, $I_{10}/I_2$, wherein $I_{10}$ is measured according to ASTM D1238 (10 kg @ 190°C), of from 6 to 7.4; and molecular weight distribution, MWD, ($M_w/M_n$) of from 2.5 to 3.5.

In yet another embodiment, the instant invention provides a polyethylene composition comprising the reaction product of ethylene and optionally one or more alpha-olefin comonomers in the presence of a catalyst composition consisting essentially of a tri-metallic procatalyst via solution polymerization; wherein said polyethylene composition is characterized by at least one of the following properties: a melt index, $I_2$, measured according to ASTM D 1238 (2.16 kg @190°C), of from 2.5 to 5 g/10 min; density, measured according to ASTM D-792, of from 0.910 to 0.935 g/cm$^3$; a melt flow ratio, $I_{10}/I_2$, wherein $I_{10}$ is measured according to ASTM D1238 (10 kg @ 190°C), of from 6 to 7.4; and molecular weight distribution, MWD, ($M_w/M_n$) of from 2.5 to 3.5.

## EXAMPLES

A multi-metal catalyst is prepared (Catalyst 1) and a non-multi-metal catalyst is prepared (Catalyst A). Catalyst 1 is then used to prepare inventive polyethylene compositions (LLDPE polymers) in a solution polymerization. Catalyst A is used to prepare comparative polyethylene compositions. Subsequently, the inventive and comparative polyethylene compositions are used to prepare inventive and comparative cast films, respectively. Testing is carried out on both the polyethylene compositions and the cast films.

### General Description of Preparation of Catalysts

The catalyst compositions may be prepared beginning first with preparation of a conditioned magnesium halide based support. Preparation of a conditioned magnesium halide based support begins with selecting an organomagnesium compound or a complex including an organomagnesium compound. Such compound or complex is desirably soluble in an inert hydrocarbon diluent. In one embodiment, the concentrations of components are such that when the active halide, such as a metallic or non-metallic halide, and the magnesium complex are combined, the resultant slurry is from about 0.005 to about 0.3 molar (moles/liter) with respect to magnesium. Examples of suitable inert organic diluents include liquefied ethane, propane, isobutane, n-butane, n-hexane, the various isomeric hexanes, isooctane, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and especially those having boiling points in the range from about -50 °C to about 200 °C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. Preferred sources of magnesium moieties may include the magnesium C2-C8 alkyls and C1-C4 alkoxides. Such organomagnesium compound or complex may be reacted with a metallic or non-metallic halide source, such as a chloride, bromide, iodide, or fluoride, in order to make a magnesium halide compound under suitable conditions. Such conditions may include a temperature ranging from -25 °C to 100 °C, or alternatively, 0 °C to 50 °C; a time ranging from 1 to 12 hours, or alternatively, from 4 to 6 hours; or both. The result is a magnesium halide based support.

The magnesium halide support is then reacted with a selected conditioning compound containing an element selected from the group consisting of boron, aluminum, gallium, indium and tellurium, under conditions suitable to form a conditioned magnesium halide support. This compound and the magnesium halide support are then brought into contact under conditions sufficient to result in a conditioned magnesium halide support. Such conditions may include a temperature ranging from 0 °C to 50 °C, or alternatively, from 25 °C to 35 °C; a time ranging from 4 to 24 hours, or alternatively, from 6 to 12 hours; or both. Without wishing to be bound by any theory of mechanism, it is suggested that this aging serves to facilitate or enhance adsorption of additional metals onto the support.

Once the conditioned support is prepared and suitably aged, it is brought into contact with a titanium compound. In certain preferred embodiments titanium halides or alkoxides, or combinations thereof, may be selected. Conditions may include a temperature within the range from 0 °C to 50 °C, or alternatively, from 25 °C to 35 °C; a time from 3 hours to 24 hours, or alternatively, from 6 hours to 12 hours; or both. The result of this step is adsorption of at least a portion of the titanium compound onto the conditioned magnesium halide support.

***Additional steps in preparing multi-metal catalyst used to make the inventive polyethylene compositions***

For those catalysts used to make the inventive polyethylene compositions, i.e. multi-metal catalysts herein, two additional metals, referred to herein as "the second metal" and "the third metal" for convenience, will also be adsorbed onto the magnesium based support, The "second metal" and the "third metal" are independently selected from zirconium (Zr), hafnium (Hf), vanadium (V), niobium (Nb), tantalum (Ta), chromium (Cr), molybdenum (Mo), and tungsten (W). These metals may be incorporated in any of a variety of ways known to those skilled in the art, but generally contact between the conditioned magnesium based halide support including titanium and the selected second and third metals, in, e.g., liquid phase such as an appropriate hydrocarbon solvent, will be suitable to ensure deposition of the additional metals to form what may now be referred to as the "procatalyst," which is a multi-metallic procatalyst.

In certain embodiments, the multi-metal procatalyst exhibits a molar ratio of the magnesium to a combination of the titanium and the second and third metals that ranges from 30:1 to 5:1; under conditions sufficient to form a multi-metallic procatalyst. Thus, the overall molar ratio of magnesium to titanium ranges from 8:1 to 80:1.

Once the procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the procatalyst and the organometallic cocatalyst may be carried out *in situ,* or just prior to entering the polymerization reactor. Thus, the combination of the cocatalyst and the procatalyst may occur under a wide variety of conditions. Such conditions may include, for example, contacting them under an inert atmosphere such as nitrogen, argon or other inert gas at temperatures in the range from 0 °C to 250 °C, or alternatively, from 15 °C to 200 °C. In the preparation of the catalytic reaction product, it is not necessary to separate hydrocarbon soluble components from hydrocarbon insoluble components. Time for contact between the procatalyst and cocatalyst may range, for example, from 0 to 240 seconds, or alternatively, from 5 to 120 seconds. Various combinations of these conditions may be employed.

***Catalyst A Preparation***

To 800 mL of $MgCl_2$ (0.20 M in ISOPAR™ E) is added $(C_2H_5)AlCl_2$ (48 mL of a 1.0 M solution in hexane). The resulting mixture is allowed to stir overnight at room temperature. A solution of $Ti(OiPr)_4$ (titanium isopropoxide, 48 mL of a 0.25 M solution in ISOPAR™ E) is then added to the magnesium/aluminum suspension. The resulting mixture is allowed to stir overnight to complete the procatalyst aging.

***Catalyst 1 Preparation***

To approximately 109 kg of 0.20 M $MgCl_2$ slurry was added 7.76 kg of EADC solution (15 wt% in heptanes), followed by agitation for 8 hours. A mixture of $TiCl_4/VOCl_3$ (85 mL and 146 mL, respectively) was then added, followed by a solution of $Zr(TMHD)_4$ (0.320 kg of a 0.30 M solution in Isopar E). These two additions were performed sequentially within 1 hour of each other. The resulting catalyst premix was aged with agitation for an additional 8 h prior to use.

Each of the catalysts prepared hereinabove is then used to prepare Polyethylene Compositions as described below.

***Production of Inventive Polyethylene Composition Examples 1 and 2 (Inv. PE Comp. Ex. 1 and Inv. PE Comp. Ex. 2) and Comparative Polyethylene Composition Examples A and B (Comp. PE Comp. Ex. A and Comp. PE Comp. B)***

All raw materials (ethylene, 1-hexene, 1-octene) and the process solvent (an isoparaffinic solvent under the tradename ISOPAR E, which is commercially available from ExxonMobil Corporation) are purified with molecular sieves before introduction into the reaction environment. Hydrogen is supplied in pressurized cylinders as a high purity grade and is not further purified. The reactor monomer feed (ethylene) stream is pressurized via a mechanical compressor to a pressure that is above the reaction pressure, e.g. 750 psig. The solvent and comonomer (1-octene or 1-hexene) feed is pressurized via a mechanical positive displacement pump to pressure that is above the reaction pressure, e.g. 750 psig. The individual catalyst components are manually batch diluted to specified component concentrations with purified solvent (ISOPAR E) and pressured to a pressure that is above the reaction pressure, e.g. 750 psig. All reaction feed flows are measured with mass flow meters and independently controlled with computer automated valve control systems.

The continuous solution polymerization reactor consists of a liquid full, non-adiabatic, isothermal, circulating, loop. Independent control of all fresh solvent, monomer, comonomer, hydrogen, and catalyst component feeds is possible. The combined solvent, monomer, comonomer and hydrogen feed is temperature controlled to anywhere between 5° C to 50° C and typically 40° C by passing the feed stream through a heat exchanger. The fresh comonomer feed to the polymerization reactor is aligned to add comonomer to the recycle solvent. The total fresh feed to the polymerization reactor is injected into the reactor at two locations roughly with equal reactor volumes between each injection location. The fresh feed is controlled typically with each injector receiving half of the total fresh feed mass flow. The catalyst components are injected into the polymerization reactor through a specially designed injection inlet device and are combined into one mixed procatalyst/cocatalyst feed stream prior to injection into the reactor. The cocatalyst component is fed based on calculated specified molar ratios to the procatalyst component. Immediately following each fresh injection location (either feed or catalyst), the feed streams are mixed with the circulating polymerization reactor contents with Kenics static mixing elements. The contents of the reactor are continuously circulated through heat exchangers responsible for removing much of the heat of reaction and with the temperature of the coolant side responsible for maintaining an isothermal reaction environment at the specified temperature. Circulation around the reactor loop is provided by a screw pump. The effluent from the polymerization reactor (containing solvent, monomer, comonomer, hydrogen, catalyst components, and molten polymer) exits the reactor loop and enters a zone where it is contacted with a deactivating and acid scavenging agent (typically calcium stearate and the accompanying water of hydration) to stop the reaction and scavenge hydrogen chloride. In addition, various additives such as anti-oxidants can be added at this point. The stream then goes through another set of Kenics static mixing elements to evenly disperse the catalyst kill and additives.

Following additive addition, the effluent (containing solvent, monomer, comonomer, hydrogen, catalyst components, and molten polymer) passes through a heat exchanger to raise the stream temperature in preparation for separation of the polymer from the other lower boiling reaction components. The stream then passes through a pressure let down control valve (responsible for maintaining the pressure of the reactor at a specified target). The stream then enters a two stage separation and devolatilization system where the polymer is removed from the solvent, hydrogen, and unreacted monomer and comonomer. Impurities are removed from the recycled stream before entering the reactor again. The separated and devolatilized polymer melt is pumped through a die specially designed for underwater pelletization, cut into uniform solid pellets, dried, and transferred into a hopper. After validation of initial polymer properties, the solid polymer pellets are transferred to storage devices.

The portions removed in the devolatilization step may be recycled or destroyed. For example, most of the solvent is recycled back to the reactor after passing through purification beds. The recycled solvent can still have unreacted co-monomer in it that is fortified with fresh co-monomer prior to re-entry to the reactor. The recycled solvent can still have some hydrogen which is then fortified with fresh hydrogen.

Tables 1 - 3 summarize polymerization conditions for Inventive Polyethylene Compositions 1 and 2 and Comparative Polyethylene Compositions A and B. Additives used in these polymerizations were 400 ppm calcium stearate, 500 ppm DHT-4a, 1000 ppm IRGAFOS 168 (which is tris (2,4 di-tert-butylphenyl) phosphite), 250 ppm IRGANOX 1076 (which is octadecyl-3-(3,5-di-tert-butyl-4-hydroxyphenyl)propionate), and 200 ppm IRGANOX 1010 (which is tetrakis (methylene (3,5-di-tert-butyl-4hydroxyhydrocinnamate)). DHT-4a is a synthetic hydrotalcites commercially available from Kisuma Chemicals BV. IRGAFOS 168, IRGANOX 1076, and IRGANOX 1010 are commercially available from BASF.

Tables 4 and 5 provide selected properties and metal catalyst residuals of the inventive and comparative polyethylene compositions. (conversion for the tables: 1 mil = 25,4 $\mu$m and 1 lb = 435,6 g)

**Table 1**

| REACTOR FEEDS | Comp. PE Comp. Ex. A | Inv. PE Comp. Ex. 1 | Comp. PE Comp. Ex. B | Inv. PE Comp. Ex. 2 |
|---|---|---|---|---|
| Primary Reactor Feed Temperature (°C) | 15 | 40 | 40 | 40 |
| Primary Reactor Total Solvent Flow (lb/hr) | 1,387 | 1,387 | 1,420 | 1,948 |
| Primary Reactor Fresh Ethylene Flow (lb/hr) | 365 | 365 | 373 | 375 |
| Primary Reactor Total Ethylene Flow (lb/hr) | 376 | 376 | 384 | 390 |
| Comonomer Type | 1-octene | 1-octene | 1-hexene | 1-hexene |
| Primary Reactor Fresh Comonomer Flow (lb/hr) | 52 | 45 | 43 | 41 |
| Primary Reactor Total Comonomer Flow (lb/hr) | 234 | 207 | 201 | 210 |

(continued)

| REACTOR FEEDS | Comp. PE Comp. Ex. A | Inv. PE Comp. Ex. 1 | Comp. PE Comp. Ex. B | Inv. PE Comp. Ex. 2 |
|---|---|---|---|---|
| Primary Reactor Feed Solvent/ Ethylene Ratio | 3.80 | 3.80 | 3.81 | 5.19 |
| Primary Reactor Fresh Hydrogen Flow (sccm) | 4608 | 4206 | 2805 | 5096 |
| Primary Reactor Hydrogen mole% | 0.188 | 0.172 | 0.112 | 0.200 |

**Table 2**

| REACTION CONDITIONS | Comp. PE Comp. Ex. A | Inv. PE Comp. Ex. 1 | Comp. PE Comp. Ex. B | Inv. PE Comp. Ex. 2 |
|---|---|---|---|---|
| Primary Reactor Control Temperature (°C) | 190 | 180 | 188 | 175 |
| Primary Reactor Pressure (Psig) | 725 | 725 | 725 | 725 |
| Primary Reactor FTnIR Outlet [C2] (g/L) | 8.6 | 8.6 | 8.6 | 8.1 |
| Primary Reactor $\log_{10}$ Viscosity (log(cP)) | 2.86 | 2.93 | 2.83 | 2.29 |
| Primary Reactor Polymer Concentration (wt%) | 23.0 | 22.6 | 22.4 | 17.2 |
| Primary Reactor Exchanger's Heat Transfer Coefficient (BTU/(hr ft$^2$ °F)) | 38 | 32 | 29 | 33 |
| Primary Reactor Polymer Residence Time (hr) | 0.11 | 0.11 | 0.11 | 0.08 |
| Overall Ethylene conversion by vent (wt%) | 93.4 | 93.4 | 93.4 | 92.0 |

**Table 3**

| CATALYST | Comp. PE Comp. Ex. A | Inv. PE Comp. Ex. 1 | Comp. PE Comp. Ex. B | Inv. PE Comp. Ex. 2 |
|---|---|---|---|---|
| Primary Reactor Catalyst | Catalyst A | Catalyst 1 | Catalyst A | Catalyst 1 |
| Primary Reactor Catalyst Flow (lb/hr) | 1.80 | 1.32 | 1.14 | 1.02 |
| Primary Reactor Catalyst Concentration (ppm) | 500 | 258 | 500 | 258 |
| Primary Reactor Catalyst Efficiency (M lbs Poly/lb Zr) | 0.45 | 1.17 | 0.71 | 1.52 |
| Primary Reactor Catalyst Metal Molecular Weight (g/mol) | 47.9 | 47.9 | 47.9 | 47.9 |
| Primary Reactor Co-Catalyst-1 Molar Ratio | 4.0 | 10.0 | 4.0 | 10.0 |
| Primary Reactor Co-Catalyst-1 Type | TEA* | TEA | TEA | TEA |
| Primary Reactor Co-Catalyst-1 Flow (lb/hr) | 2.14 | 2.03 | 1.36 | 1.57 |
| Primary Reactor Co-Catalyst-1 Concentration (ppm) | 4,000 | 4,000 | 4,000 | 4,000 |
| * TEA is tri-ethyl-aluminum. | | | | |

**Table 4**

|  | $I_2$, g/10 min | Density, g/cm$^3$ | $I_{10}/I_2$ | Mw/Mn |
|---|---|---|---|---|
| Comp. PE Comp. Ex. A | 2.16 | 0.9168 | 7.32 | 3.49 |
| Comp. PE Comp. Ex. B | 2.34 | 0.9181 | 7.54 | 3.82 |
| Inv. PE Comp. Ex.2 | 2.91 | 0.9181 | 6.96 | 2.94 |
| Inv. PE Comp. Ex. 1 | 2.15 | 0.9164 | 6.97 | 3.00 |

**Table 5\***

| Example | Al, ppm | Mg, ppm | Ti, ppm | V, ppm | Hf, ppb | Zr, ppm | Cl, ppm |
|---|---|---|---|---|---|---|---|
| Comp. PE Comp. Ex. A | 53 ± 2 | 110 ± 10 | 1.9 ± 0.2 | ND @ 0.01 | ND @ 0.05 | ND @ 0.5 | 39 ± 2 |
| Comp. PE Comp. Ex. B | 51 ± 2 | 100 ± 10 | 1.4 ± 0.2 | ND @ 0.01 | ND @ 0.05 | ND @ 0.5 | 47 ± 2 |
| Inv. PE Comp. Ex.1 | 53 ± 2 | 110 ± 10 | 0.8 ± 0.1 | 1.5 ± 0.2 | ND @ 0.05 | 0.7 ± 0.1 | 45 ± 2 |
| Inv. PE Comp. Ex. 2 | 62 ± 3 | 130 ± 10 | 0.3 ± 0.1 | 1.06 ± 0.05 | ND @ 30 | 0.70 ± 0.07 | 39 ± 2 |

\* Niobium (Nb) (5 ppm), tantalum (Ta) (50 ppb), chromium (Cr) (0.5 ppm), molybdenum (Mo) (50 ppb), and tungsten (W) (5ppm) were not detected in any of the examples at their respective detection limits, as indicated in the parentheses following each element.

***Monolayer Film Production (First Set)***

All films were made on a 5 layer Egan-Davis Standard cast extrusion line with conditions shown in the following table. Inventive Monolayer Films 2-1 and 2-2 were produced using Inventive Polyethylene Composition 2. Inventive Monolayer Film 2-1 had a thickness of 0.8 mil and Inventive Monolayer Film 2-2 had a thickness of 0.5 mil. Comparative Monolayer Films A1 and A2 were produced using Comparative Polyethylene Composition A. Comparative Monolayer Film A1 had a thickness of 0.8 mil and Comparative Monolayer Film A2 had a thickness of 0.5 mil. Tables 6-8 provide the film production particulars and selected physical properties of the monolayer films.

**Table 6: Running conditions in cast line for monolayer films**

| PE Composition | Monolayer Film | Melt Temp [°F] | | Ext. Speed [RPM] | | Rate [lb/hr] | Highest Ext. Press [psi] |
|---|---|---|---|---|---|---|---|
| | | min | Max | min | Max | | |
| Comp. PE Comp. Ex. A | Comp. A1 (0.8mil) | 517 | 552 | 26 | 63 | 409 | 2531 |
| Comp. PE Comp. Ex. A | Comp. A2 (0.5mil) | 517 | 552 | 26 | 63 | 393 | 2419 |
| Inv. PE Comp. Ex.2 | Inv. 2-1 (0.8 mil) | 497 | 540 | 26 | 63 | 333 | 2521 |
| Inv. PE Comp. Ex. 2 | Inv. 2-2 (0.5 mil) | 490 | 541 | 26 | 63 | 401 | 2534 |

**Table 7: Monolayer Cast Film Properties at 0.8 mil.**

| Monolayer Film | Film Thickness (mil) | Ultimate Stretch (%) | On Pallet Puncture (lb) |
|---|---|---|---|
| Comp. A1 | 0.8 | 268 | 9.0 |
| Inv. 2-1 | 0.8 | 319 | 9.0 |

**Table 8: Monolayer Cast Film Properties at 0.5 mil.**

| Monolayer Film | Film Thickness (mil) | Ultimate Stretch (%) | On Pallet Puncture (lb) |
|---|---|---|---|
| Comp. A2 | 0.5 | 208 | 8.0 |
| Inv. 2-2 | 0.5 | 248 | 8.5 |

*Multilayer Film Production*

Five layer (A/B/C/D/E) films were made in a 5 layer Egan-Davis Standard cast extrusion line with a target total gauge of 0.8 mil and wherein each layer is 20% of the total thickness. The processing conditions for each resin are shown in Table 9. Comparative Multilayer Film A was made using 3 core layers made from Comparative Polyethylene Composition A. Comparative Multilayer Film B was made using 3 core layers made from Comparative Polyethylene Composition B. Inventive Multilayer Film 1 was made using 3 core layers made from Inventive Polyethylene Composition 1. Inventive Multilayer Film 2 was made using 3 core layers made from Inventive Polyethylene Composition 2.

**Table 9: Running conditions in cast line for multilayer films**

| | Melt Temp [°F] | | Ext. Speed [RPM] | | Rate [lb/hr] | Highest Ext. Press [psi] |
|---|---|---|---|---|---|---|
| | min | Max | min | max | | |
| Comparative Multilayer Film A | 514 | 543 | 24 | 59 | 391 | 2,383 |
| Inventive Multilayer Film 2 | 523 | 541 | 25 | 60 | 391 | 2,255 |
| Comparative Multilayer Film B | 504 | 537 | 24 | 60 | 387 | 2,374 |
| Inventive Multilayer Film 1 | 521 | 544 | 24 | 59 | 411 | 2,543 |

Table 10 provides the layer compositions for each of the multi-layer films. Each multilayer film comprises a release layer made from DOWLEX 2247G, a polyethylene resin commercially available from The Dow Chemical Company, having an $I_2$ of 2.3 g/10 min and a density of 0.917 g/cc. Each multilayer film comprises a cling layer made from ATTANE 4404G, a polyethylene resin commercially available from The Dow Chemical Company, having an $I_2$ of 4.0 g/10 min and a density of 0.904 g/cc. Table 11 provides selected physical properties of the multilayer films.

**Table 10**

| | Release | Core Layer | | | Cling |
|---|---|---|---|---|---|
| | Layer A Resin | Layer B Resin | Layer C Resin | Layer D Resin | Layer E Resin |
| Comparative Multilayer Film A | DOWLEX 2247G | Comp. PE Composition A | Comp. PE Composition A | Comp. PE Composition A | ATTANE 4404G |
| Inventive Multilayer Film 2 | DOWLEX 2247G | Inv. PE Composition 2 | Inv. PE Composition 2 | Inv. PE Composition 2 | ATTANE 4404G |
| Comparative Multilayer Film B | DOWLEX 2247G | Comp. PE Composition B | Comp. PE Composition B | Comp. PE Composition B | ATTANE 4404G |
| Inventive Multilayer Film 1 | DOWLEX 2247G | Inv. PE Composition 1 | Inv. PE Composition 1 | Inv. PE Composition 1 | ATTANE 4404G |

**Table 11**

| | Comp. Multilayer Film A | Inv. Multilayer Film 2 | Comp. Multilayer Film B | Inv. Multilayer Film 1 |
|---|---|---|---|---|
| Ultimate Stretch (%) | 310 | 328 | 307 | 322 |
| On Pallet Puncture (lbs) | 8.0 | 10.5 | 9.0 | 9.5 |

*Monolayer Film Production (Second Set)*

A second set of films was produced using the Inventive Polyethylene Composition 2 about ten months following the production of the first set of films discussed above. All such films were made on a 5 layer Egan-Davis Standard cast extrusion line with conditions shown in the following table. Inventive Monolayer Film 2-3 was produced using Inventive Polyethylene Composition 2. Inventive Monolayer Film 2-3 had a thickness of 0.8 mil. Comparative Monolayer Film C1 was produced using Comparative Polyethylene Composition C. Comparative Polyethylene Composition C is TUFLIN HS-7001 NT 7 Linear Low Density Polyethylene Resin, a polyethylene resin commercially available from The Dow Chemical Company, having an $I_2$ of 3.2 g/10 min and a density of 0.9178 g/cc. Comparative Monolayer Film C1 had a thickness of 0.8 mil. A blend of 65% Inventive Polyethylene Composition 1/35% Comparative Example C and also a blend of 35% Inventive Polyethylene Composition 1/65% Comparative Example C were also made at 0.8 mil thickness. Each formulation was compounded on a MAGUIRE gravimetric blender.

Tables 12-13 provide the film production particulars and selected physical properties of the monolayer films. Table 13 demonstrates that blending the Inventive Polyethylene Composition with a Linear Low Density Polyethylene of higher stretchability but lower puncture than the Inventive Polyethylene Composition allows the balance of stretchability and puncture to be altered. Depending on the desired balance of stretchability and puncture, the % of the Inventive Polyethylene Composition can be altered as shown in Table 13.

Differences in properties of the films may show some variability from trial to trial as fabrication conditions can have an impact on performance. Thus, the best approach to evaluate resins is to compare performance of those films made during the same trial using similar conditions. The cast line, where films were fabricated, was upgraded after the first set of film data was gathered (Monolayer Film Production (First Set)). The upgrade included changing the winder system which applies tension to the film after casting onto the chill roll. The new winders are from Webex Inc. and allow up to 1200 ft/min whereas the winder used in the first set of films was only capable of up to 900 ft/min. The upgrades further included a new die (including a different die design from that used to prepare the first set of films) which could also impact film properties.

**Table 12: Running conditions in cast line for monolayer films (Second Set)**

| PE Composition | Monolayer Film | Melt Temp [°F] | | Ext. Speed [RPM] | | Rate [lb/hr] | Highest Ext. Press [psi] |
|---|---|---|---|---|---|---|---|
| | | min | Max | min | Max | | |
| Inv. PE Comp. Ex.2 | Inv. 2-3 (0.8 mil) | 517 | 540 | 28 | 68 | 449 | 2120 |
| Comp. PE Comp. Ex. C | Comp. C1 (0.8mil) | 513 | 538 | 25 | 62 | 428 | 1871 |
| 65% Inv. PE Comp. Ex. 1/35% Comp. Ex. C | Inv. Blend 1-1 (0.8mil) | 514 | 538 | 26 | 63 | 433 | 2006 |
| 35% Inv. PE Comp. Ex. 1/65% Comp. Ex. C | Inv. Blend 1-2 (0.8mil) | 514 | 538 | 26 | 63 | 445 | 1875 |

**Table 13: Monolayer Cast Film Properties at 0.8 mil.**

| Monolayer Film | Film Thickness (mil) | Ultimate Stretch (%) | On Pallet Puncture (lb) |
|---|---|---|---|
| Inv. 2-3 | 0.8 | 341 | 13 |
| Comp. B | 0.8 | 384 | 9.75 |
| 65% Inv. PE Comp. Ex. 2/ 35% Comp. Ex. B | 0.8 | 362 | 11.5 |
| 35% Inv. PE Comp. Ex. 2/ 65% Comp. Ex. B | 0.8 | 372 | 10.5 |

## TEST METHODS

Gel Permeation Chromatography (GPC) number and weight-average molecular weights ($M_n$ and $M_w$, respectively) and molecular weight distribution ($M_w/M_n$) of the polymers are determined by Gel Permeation Chromatography (GPC).The chromatographic system consists of a Polymer Laboratories Model PL-220 high temperature chromatograph with an included refractometer. Data collection is accomplished using PolymerChAR (Valencia, Spain) GPC One software and collection interface. The system is equipped with an on-line solvent degas device from Polymer Laboratories.

The column and carousel compartments are operated at 140 °C. The columns used are 3 PL Gel Mixed B 10-micron columns and a 10-micron guard column. The solvent used is 1,2,4-trichlorobenzene. The samples are prepared at a concentration of 0.1 g of polymer in 50 mL of solvent. The chromatographic solvent and the samples preparation solvent contain 200 ppm of butylated hydroxytoluene (BHT). Both solvent sources are nitrogen sparged. The samples are stirred for 2 hours at 160 °C. The injection volume used is 200 $\mu$L and the flow rate is 1.0 mL/min. Calibration of the GPC column set is performed with a minimum of 20 narrow MWD polystyrene standards with molecular weights ranging from 580 to 8,400,000 g/mol, purchased from Polymer Laboratories (Shropshire, UK) with individual concentrations of 0.5 mg/ml and 0.25 mg/ml for molecular weights greater than 500,000. Data reduction is performed with PolymerChAR GPC One software. The polystyrene standard peak molecular weights are converted to polyethylene molecular weights using the method disclosed in Williams, T., and Ward, I.M., "The Construction of Polyethylene Calibration Curve for Gel Permeation Chromatography Using Polystyrene Fractions", J. Polym. Sci. Polym. Lett., 6, 621 (1968):

$$M_{polyethylene} = A(M_{polystyrene})^B$$

wherein M is the molecular weight, A has a value of 0.4316 and B is equal to 1.0. A 3rd-order polynomial fit was used for the calibration of Polyethylene equivalent logMW as a function of elution volume. During analysis of individual samples and calibrants, a flowrate marker (decane) was used to correct for minor (<1%) flowrate differences. Polyethylene equivalent molecular weight calculations are performed using PolymerChAR GPC One software Version.

### *Neutron Activation Method for Metals*

Two sets of duplicate samples were prepared by transferring approximately 3.5 grams of the pellets into pre-cleaned 2 dram polyethylene vials. Standards were prepared for each metal tested from their NIST traceable standard solutions (Certi. pure from SPEX) into 2-dram polyethylene vials. They were diluted using milli-Q pure water to 6ml and the vials were heat-sealed. The samples and standards were then analyzed for these elements, using a Mark I TRIGA nuclear reactor. The reactions and experimental conditions used for these elements are summarized in the table below. The samples were transferred to un-irradiated vials before doing the gamma-spectroscopy. The elemental concentrations were calculated using CANBERRA software and standard comparative technique. ND means Not Detected at the quoted detection limit of the NAA measurement system. Table 12 provides measurement parameters for metals determination.

**Table 14: Reactions and experimental conditions used for elements during the NAA**

| Elements | Nuclear reaction | Isotope | Half life | Reactor Power | Irradiation Time | Waiting Time | Counting Time | Gamma Energy, keV |
|---|---|---|---|---|---|---|---|---|
| Al | $^{27}$Al(n,$\gamma$)$^{28}$Al | $^{28}$Al | 2.24 m | 250 kW | 2 m | 4 m | 4.5 min | 1778.5 |
| Cl | $^{37}$Cl(n,$\gamma$)$^{38}$Cl | $^{38}$Cl | 37.2 m | 250 kW | 2 m | 4 m | 4.5 min | 1642.5, 2166.5 |
| Cr | $^{50}$Cr(n,)$^{51}$Cr | $^{51}$Cr | 27.7 d | 250 kW | 90 m | 5 h | 1.6 h | 320 |
| Hf | $^{180}$Hf(n,$\gamma$)$^{181}$Hf | $^{181}$Hf | 42.4 d | 250 kW | 90 m | 5 h | 1.6 h | 133, 482 |
| Mg | $^{26}$Mg(n,$\gamma$)$^{27}$Mg | $^{27}$Mg | 9.46 m | 250 kW | 2 m | 4 m | 4.5 min | 843.8, 1014 |
| Mo | $^{98}$Mo(n,$\gamma$)$^{99}$Mo | $^{99}$Mo | 66.0 h | 250 kW | 90 m | 5 h | 1.6 h | 181, 739.7, 141 |

(continued)

| Elements | Nuclear reaction | Isotope | Half life | Reactor Power | Irradiation Time | Waiting Time | Counting Time | Gamma Energy, keV |
|---|---|---|---|---|---|---|---|---|
| Nb | $^{93}Nb(n, \gamma)^{94m}Nb$ | $^{94m}Nb$ | 6.26 m | 250 kW | 2 m | 4 m | 4.5 min | 871 |
| Ta | $^{181}Ta(n, \gamma)^{182}Ta$ | $^{182}Ta$ | 114.4 d | 250 kW | 90 m | 5 h | 1.6 h | 1121, 1222 |
| Ti | $^{50}Ti(n, \gamma)^{51}Ti$ | $^{51}Ti$ | 5.76m | 250 kW | 2 m | 4 m | 4.5 min | 320 |
| w | $^{186}W(n, \gamma)^{187}W$ | $^{187}W$ | 23.7 h | 250 kW | 90 m | 5 h | 1.6 h | 135, 481 |
| V | $^{51}V(n, \gamma)^{52}V$ | $^{52}V$ | 3.75 m | 250 kW | 2 m | 4 m | 4.5 min | 1434 |
| Zr | $^{96}Zr(n, \gamma)^{97}Zr$ | $^{97}Zr$ | 16.91 h | 250 kW | 90 m | 5 h | 1.6 h | 743.4 |

***Ultimate Stretch***

Ultimate stretch is tested on a Highlight Film Test System from Highlight Industries. The film roll is placed on the unwind section of the machine and the film is passed through a set of rollers. The film is then unwound with increasing force until it reaches its ultimate stretch point. Load cells measure the amount of force applied and a calculation is made to determine the amount of stretch present in the film, measured in percent.

***On-Pallet Puncture:***

This test uses a Bruceton staircase method to determine the maximum force to load at which the film can be passed over a test probe for three wraps with no failures. The test probe is inserted into the test stand at the desired protrusion distance. The film is positioned such that the test probe is aligned with the center of the film. The film is attached to the test stand and the wrapper started. Once the wrapper reaches 200% pre-stretch, the film is allowed to pass over the probe for a maximum of three wraps. Any breakage of the film during any of the wrap is considered a failure at that force to load setting. Depending on the performance of the film at the load setting (i.e. passed or failed), the force to load is adjusted up or down, and the test is repeated at the new load setting. This continues until the maximum force at which no failures occurs is found. Table 15 provides the equipment and settings used in this method.

**Table 15**

| Equipment: | Lantech SHC Film Test Wrapper |
|---|---|
| Pre-stretch: | 200% |
| Turntable Speed | 9 rpm |
| Force to Load (F2) | Variable |
| Probe Type | 4" by 4" blunt rod |
| Probe Protrusion Distance | 12 in |

**Claims**

**1.** A multilayer cast film wherein at least one layer comprises a polyethylene composition comprising the reaction product of ethylene and optionally one or more alpha-olefin comonomers in the presence of a catalyst composition comprising a multi-metallic procatalyst via solution polymerization; wherein said polyethylene composition is **characterized by** one or more of the following properties:

(a) a melt index, $I_2$, measured according to ASTM D 1238 (2.16 kg @ 190°C), of from 2.5 to 5 g/10 min;
(b) density (measured according to ASTM D792) from 0.910 to 0.935 g/cm$^3$;
(c) a melt flow ratio, $I_{10}/I_2$, wherein $I_{10}$ is measured according to ASTM D1238 (10 kg @ 190°C) of from 6 to 7.4; and
(d) molecular weight distribution ($M_w/M_n$) of from 2.5 to 3.5; and wherein when said polyethylene composition is formed into the multilayer film at a 20.3 $\mu$m (0.8 mil) thickness according to the method described herein said film is characterized with:

> (a) ultimate stretch greater than 320 % measured as described herein; and
> (b) on-pallet puncture of greater than 4.082 kg (9 lb) measured as described herein.

**2.** The multilayer cast film according to claim 1 wherein the polyethylene composition is characterized as comprising metal catalyst residual of greater than or equal to 1 parts by combined weight of at least three metal residues per one million parts of polyethylene polymer, where such metals are selected from the group consisting of titanium, zirconium, hafnium, vanadium, niobium, tantalum, chromium, molybdenum, tungsten, and combinations thereof, and wherein each said residual metal is present at at least 0.2 ppm.

**Patentansprüche**

**1.** Eine mehrschichtige Gießfolie, wobei mindestens eine Schicht eine Polyethylenzusammensetzung beinhaltet, die das Reaktionsprodukt von Ethylen und optional einem oder mehreren alpha-Olefin-Comonomeren in Gegenwart einer einen mehrmetallischen Prokatalysator beinhaltenden Katalysatorzusammensetzung mittels Lösungspolymerisation beinhaltet; wobei die Polyethylenzusammensetzung durch eine oder mehrere der folgenden Eigenschaften gekennzeichnet ist:

> (a) einen Schmelzindex, $I_2$, gemessen gemäß ASTM D 1238 (2,16 kg bei 190 °C), von 2,5 bis 5 g/10 min;
> (b) eine Dichte (gemessen gemäß ASTM D792) von 0,910 bis 0,935 g/cm$^3$;
> (c) ein Schmelzflussverhältnis, $I_{10}/I_2$, wobei $I_{10}$ gemäß ASTM D1238 (10 kg bei 190 °C) gemessen wird, von 6 bis 7,4; und
> (d) eine Molmassenverteilung ($M_w/M_n$) von 2,5 bis 3,5; und wobei, wenn die Polyethylenzusammensetzung gemäß dem hier beschriebenen Verfahren zu der mehrschichtigen Folie mit einer Dicke von 20,3 $\mu$m (0,8 mil) gebildet wird, die Folie durch Folgendes gekennzeichnet ist:

>> (a) eine äußerste Dehnung von mehr als 320 %, wie hier beschrieben gemessen; und
>> (b) einen Durchstoß auf der Palette von mehr als 4,082 kg (9 lb), wie hier beschrieben gemessen.

**2.** Mehrschichtige Gießfolie gemäß Anspruch 1, wobei die Polyethylenzusammensetzung **dadurch gekennzeichnet ist, dass** sie einen Metallkatalysatorrest von mehr als oder gleich 1 Teil nach kombiniertem Gewicht von mindestens drei Metallresten pro eine Million Teile Polyethylenpolymer beinhaltet, wobei derartige Metalle aus der Gruppe ausgewählt sind, die aus Titan, Zirconium, Hafnium, Vanadium, Niob, Tantal, Chrom, Molybdän, Wolfram und Kombination davon besteht, und wobei jedes Restmetall zu mindestens 0,2 ppm vorhanden ist.

**Revendications**

**1.** Un film coulé multicouche dans lequel au moins une couche comprend une composition de polyéthylène comprenant le produit de la réaction d'éthylène et facultativement d'un ou de plusieurs comonomères d'alpha-oléfine en présence d'une composition de catalyseur comprenant un procatalyseur multi-métallique par l'intermédiaire d'une polymérisation en solution ; dans lequel ladite composition de polyéthylène est **caractérisée par** une ou plusieurs des propriétés suivantes :

> (a) un indice de fluidité à chaud, $I_2$, mesuré selon l'ASTM D 1238 (2,16 kg à 190 °C), allant de 2,5 à 5 g/10 min ;
> (b) une masse volumique (mesurée selon l'ASTM D792) allant de 0,910 à 0,935 g/cm$^3$ ;
> (c) un rapport d'indice de fluidité à chaud, $I_{10}/I_2$, dans lequel $I_{10}$ est mesuré selon l'ASTM D1238 (10 kg à 190 °C), allant de 6 à 7,4 ; et
> (d) une distribution des masses moléculaires ($M_w/M_n$) allant de 2,5 à 3,5 ; et dans lequel lorsque ladite composition de polyéthylène est mise sous la forme du film multicouche à une épaisseur de 20,3 $\mu$m (0,8 millième de pouce) selon le procédé décrit ici, ledit film est **caractérisé par** :

(a) un étirement maximal supérieur à 320 % mesuré tel que décrit ici ; et

(b) une perforation sur palette supérieure à 4,082 kg (9 lb) mesurée tel que décrit ici.

2. Le film coulé multicouche selon la revendication 1 dans lequel la composition de polyéthylène est **caractérisée** comme comprenant un résidu de catalyseur métallique supérieur ou égal à 1 partie en poids combiné d'au moins trois résidus métalliques pour un million de parties de polymère de polyéthylène, où ces métaux sont sélectionnés dans le groupe constitué du titane, du zirconium, du hafnium, du vanadium, du niobium, du tantale, du chrome, du molybdène, du tungstène, et de combinaisons de ceux-ci, et dans lequel chaque dit métal résiduel est présent à au moins 0,2 ppm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 116070

- US 6485662 B

**Non-patent literature cited in the description**

- **WILLIAMS, T. ; WARD, I.M.** The Construction of Polyethylene Calibration Curve for Gel Permeation Chromatography Using Polystyrene Fractions. *J. Polym. Sci. Polym. Lett.,* 1968, vol. 6, 621